**Europäisches Patentamt**

**European Patent Office**

**Office européen des brevets**

(19)

(11) Veröffentlichungsnummer: **0 172 535**

**B1**

(12) # EUROPÄISCHE PATENTSCHRIFT

(45) Veröffentlichungstag der Patentschrift:
02.11.88

(21) Anmeldenummer: **85110261.6**

(22) Anmeldetag: **16.08.85**

(51) Int. Cl.⁴: **F 16 J 15/34,** A 47 L 15/23, A 47 L 15/42

(54) **Dichtungsvorrichtung für ein Förder- und Verteilsystem des Spülwassers von Haushaltsgeräten, wie Geschirrspüler.**

(30) Priorität: **18.08.84 DE 3430464**

(43) Veröffentlichungstag der Anmeldung:
**26.02.86 Patentblatt 86/9**

(45) Bekanntmachung des Hinweises auf die Patenterteilung:
**02.11.88 Patentblatt 88/44**

(84) Benannte Vertragsstaaten:
**DE FR GB IT SE**

(56) Entgegenhaltungen:
**EP-A-0 006 311**
**DE-U-8 235 273**

(73) Patentinhaber: **Bauknecht Hausgeräte GmbH, Am Wallgraben 99, D-7000 Stuttgart 80 (DE)**

(72) Erfinder: **Degel, Josef, Tulpenstrasse 5, D-6653 Blieskastel (DE)**

(74) Vertreter: **Meier, Friedrich, Dipl.- Ing., Philips Patentverwaltung GmbH Wendenstrasse 35 Postfach 10 51 49, D-2000 Hamburg 1 (DE)**

EP 0 172 535 B1

LIBER, STOCKHOLM 1988

**Beschreibung**

Die Erfindung betrifft eine Dichtungsvorrichtung für ein Förder- und Verteilsystem des Spülwassers von Haushaltsgeräten, wie Geschirrspüler, nach dem Oberbegriff des Anspruches 1.

Zur Lagerung der Rotoren von Geschirrspülern werden Dichtungsringe verwendet, die ein nach außen offenes U-förmiges Profil aufweisen und mit einem Schlitz versehen sind, der verhältnismäßig breit ist. Durch diesen Schlitz kann in der Einbaulage des Dichtungsringes das unter Druck stehende Spülwasser mit hoher Geschwindigkeit austreten und dabei große Mengen Schaum entwickeln. Da an den axialen und radialen Laufflächen für den Rotorarm im U-förmigen Dichtungsring keine definierte Lagerung des Rotors möglich ist und der Schlitz im Dichtungsring verhältnismäßig breit ist, kommt es zu hohen Schälwasserverlusten im Lagerbereich der Rotoren. Es muß darum für jeden Spülgang eine große Wassermenge verwendet werden, um diese Verluste im Verteilsystem aufzufangen. Dabei kommt es wegen der großen Schlitze und Spalten dennoch zur Schaumbildung und damit auch zu einer entsprechend unangenehmen Geräuschentwicklung während des Spülvorganges. Auch im Spaltbereich der Umwälzpumpe kommt es infolge der Spaltbildung zwischen der Vorderkante eines Laufrades der Pumpe und einer Innenkante des Gehäuses in axialer und in radialer Richtung zu entsprechenden Wasserverlusten bzw. Schaum- und Geräuschbildungen.

Bei der gattungsmäßigen Dichtungsvorrichtung (DE-U-8 235 273) ist der in einer Ringnut des Tragrohres liegende Dichtungsring durchgehend geschlossen ausgebildet. Der den Dichtungsring umgebende Ring ist Bestandteil des Rotors und läuft mit diesem beim Betrieb des Geschirrspülers um. An der Kontaktstelle zwischen dem Dichtungsring und der Innenseite des drehenden Ringes tritt Reibung auf und führt zu einem erheblichen Verschleiß des Dichtungsringes. Damit ist keine einwandfreie Abdichtung mehr gewährleistet, so daß das unter Druck stehende Spülwasser zwischen der Dichtung und dem Ring nach außen gelangen kann. Dadurch treten hohe Leckverluste auf.

Aus der EP-A-0 006 311 ist ein federelastischer Dichtring mit einem in Umfangsrichtung verlaufenden, labyrinthartigen Spalt für den Einsatz bei rotierenden Wellen bekannt. Der Dichtring liegt dabei federnd am Stator an und bildet gegenüber dem Rotor einen durchgehenden Spalt. Eine derartige Dichtanordnung erfordert, wenn sie einigermaßen dicht sein soll, eine sehr hohe Präzision in der Fertigung, die bei langsam laufenden Rotoren in Geschirrspülmaschinen u.dgl. nicht sinnvoll ist und auch nicht eingehalten werden kann.

Der Erfindung liegt die Aufgabe zugrunde, die gattungsgemäße Dichtungsvorrichtung so auszubilden, daß bei konstruktiv einfacher und preiswerter Ausbildung der Verschleiß im Dichtungsbereich gering gehalten wird und daß bei dem unvermeidlichen Verschleiß des Dichtungsringes während der Betriebsdauer der Dichtungsvorrichtung die Wasserverluste dennoch klein gehalten werden können.

Diese Aufgabe wird bei der gattungsgemäßen Dichtungsvorrichtung erfindungsgemäß mit den kennzeichnenden Merkmalen des Anspruches 1 gelöst.

Bei der erfindungsgemäßen Dichtungsvorrichtung wird der Spalt des Dichtungsringes so eingestellt, daß minimale Wassermengen hindurchtreten können, die ausreichen, um einen Lauffilm zur Schmierung der Lauffläche des Rotors zu bilden. Dadurch wird der Verschleiß des Dichtungsringes klein gehalten, so daß die erfindungsgemäße Dichtungsvorrichtung eine lange Lebensdauer hat. Außerdem kommt es dadurch zu einer weitgehenden Reduzierung von Schälwasser im Lagerbereich des Rotors. Die Schaumbildung und damit auch die Geräuschbildung wird dadurch wesentlich herabgesetzt. Das von der Umwälzpumpe des Haushaltsgerätes geförderte Wasser strömt somit nahezu ohne Wasserverluste durch das Förder- und Verteilsystem. Die Leistung der Umwälzpumpe kann wegen der geringen schälwasserverluste verringert werden bzw. bei Beibehaltung der Pumpenleistung kann eine Druckerhöhung bzw. eine Erhöhung der geförderten Wassermenge erzielt werden. Die achsparallele Fläche des Dichtungsringes liegt federnd am Zylinderteil an, wodurch eine radiale Abdichtung zwischen dem Tragrohr und dem Rotor erzielt wird. Eine axiale Abdichtung zwischen Rotor und Tragrohr wird dadurch erreicht, daß die radiale Fläche des Dichtungsringes an der parallel zur Rotorebene liegenden Dichtfläche anliegt. Infolge der federelatischen Ausbildung ist gewährleistet, daß der Dichtungsring zuverlässig am Zylinderteil anliegt. Außerdem wird der Dichtungsring im Betrieb unter dem Betriebsdruck fest gegen das Zylinderteil und die Dichtfläche gedrückt, so daß eine einwandfreie Abdichtung gewährleistet ist. Selbst wenn der Dichtungsring im Bereich der Dichtflächen verschleißen sollte, bleibt die Dichtwirkung aufrechterhalten, weil durch den Betriebsdruck gewährleistet ist, daß der Dichtungsring selbsttätig nachgestellt wird. Auch wird in Abhängigkeit vom Betriebsdruck der Dichtungsring gegen das Zylinderteil und die Dichtfläche gedrückt, so daß in Abhängigkeit vom Betriebsdruck eine selbsttätige Regelung der Anpreßkraft und damit der Dichtwirkung erreicht wird.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert.

Es zeigen

Fig. 1 in einem Teilschnitt den Lagerbereich eines Rotors eines Geschirrspülers mit einer erfindungsgemäßen Dichtungsvorrichtung,

Fig. 2 in Draufsicht und in Ansicht einen Dichtungsring der erfindungsgemäßen Dichtungsvorrichtung im entspannten Zustand,

Fig. 3 in Seitenansicht den Dichtungsring gemäß Fig. 2 in Einbaulage,

Fig. 4 in einem Teilschnitt eine in einer Umwälzpumpe eines Geschirrspülers eingebaute erfindungsgemäße Dichtungsvorrichtung,

Fig. 5 in einem Teilschnitt eine weitere Ausführungsform einer in einen Rotor eines Geschirrspülers eingebauten erfindungsgemäßen Dichtungsvorrichtung.

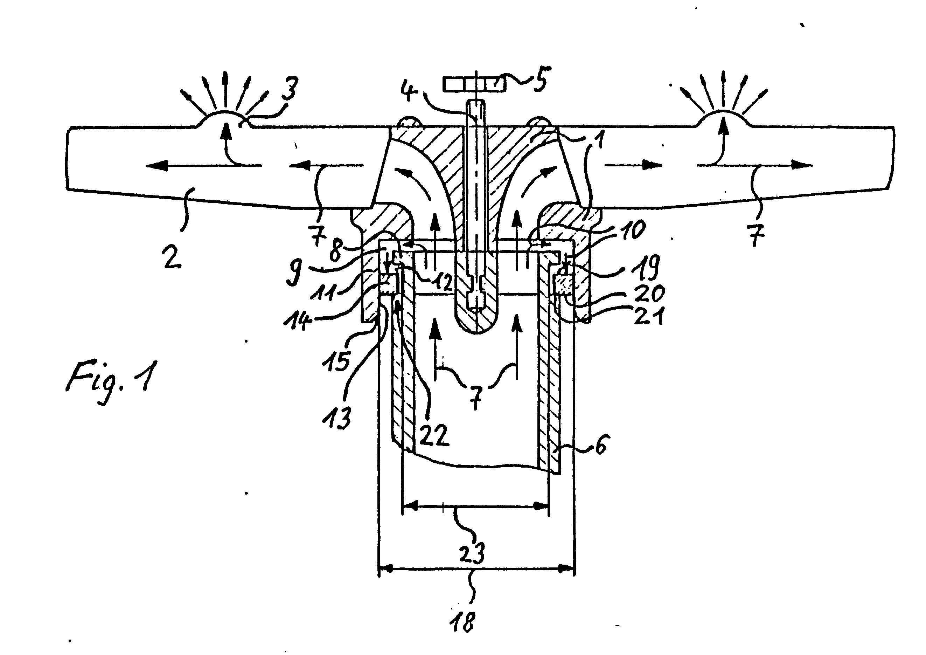

In Fig. 1 ist in Teilschnittdarstellung das Verteilsystem für einen Rotor eines Geschirrspülers zum Besprühen des Spülgutes dargestellt. Aus Gründen der Übersichtlichkeit ist nur der Lagerbereich, nicht jedoch die Umwälzpumpe und die übrigen Teile des Geschirrspülers dargestellt. Ein Rotorlager 1 trägt einen Rotorarm 2, der mit Düsen 3 zum Besprühen des Spülgutes ausgestattet ist. Das Rotorlager 1 hat einen Lagerzapfen 4, auf den der Rotorarm 2 aufgesteckt und mittels einer Mutter 5 festgeschraubt wird. Das Rotorlager 1 ist drehbar auf einer ein Tragrohr bildenden Rotornabe 6 gelagert.

Von der (nicht dargestellten) Umwälzpumpe wird das Spülwasser unter Druck in Richtung der Pfeile 7 (Fig. 1) durch das Tragrohr 6 in die Rotorarme 2 gedrückt. Hierbei wird ein Teil des unter Druck stehenden Spülwassers durch einen Spalt 9 gedrückt (Pfeile 10 in Fig. 1), der zwischen einem Kopfende 8 des Tragrohres 6 und dem Rotorlager 1 gebildet ist. Das Rotorlager 1 ist mit einem zylinderförmigen Ring 11 versehen, der in der Einbaulage nach unten ragt und den oberen Endbereich des Tragrohres 6 mit Spiel umgibt. Der Ring 11 schließt den Spalt 9 radial nach außen ab. Eine derartige Anrdnung kann am oberen und am unteren Rotor des Geschirrspülers vorgesehen sein.

Im oberen Bereich ist in der äußeren Mantelfläche des Tragrohres 6 eine Aussparung in Form einer Ringnut 12 vorgesehen, in die ein Dichtungsring 14 eingreift. Er liegt an der Innenseite 13 des zylindrischen Ringes 11 an und kann rechteckige, quadratische, kreisförmige und/oder mit winkelförmigem Profil ausgebildete Form haben. Als Material für den Dichtungsring 14 eignet sich Kunststoff mit elastischen Eigenschaften. Das Rotorlager 1 selbst kann ebenfalls aus Kunststoff gefertigt sein.

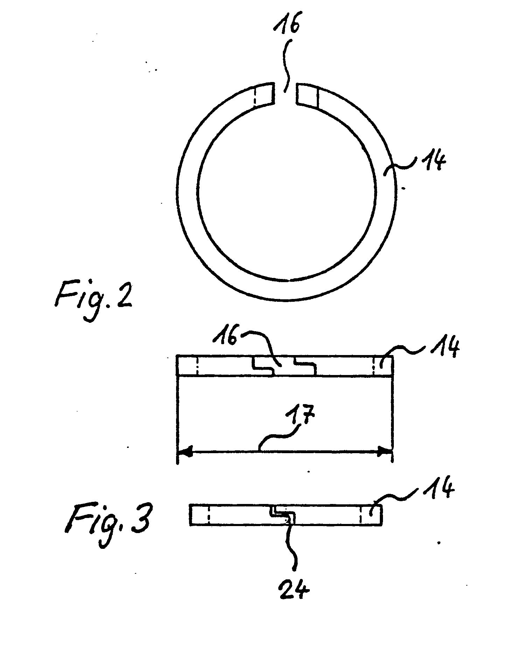

Da der Dichtungsring an dem Ring 11 des Rotorlagers 1 anliegt, läuft er in der Nut 12 der stillstehenden Rotornabe 6 um. Der Ring 11 ist am freien Ende mit einer bis in die Innenseite 13 sich erstreckenden Anlaufschräge 15 versehen. Der Dichtungsring 14 hat einen stufenförmigen Spalt 16 (Fig. 2). Die Mittelachse des Spaltes 16 verläuft infolge der stufenförmigen Ausbildung Z-förmig. Die in die Ober- und Unterseite des Dichtungsringes 14 mündenden Enden des Spaltes 16 liegen in Umfangsrichtung des Dichtungsringes versetzt zueinander. In entspanntem Zustand des Dichtungsringes 14 (Fig. 2) ist sein Außendurchmesser 17 größer als der Innendurchmesser 18 (Fig. 1) des Ringes 11. Dadurch ist der Spalt 16 verhältnismäßig breit. Der Dichtungsring 14 wird zunächst in die Ringnut 12 eingesetzt und danach das Rotorlager 1 mit dem Ring 11 über die Rotornabe 6 geschoben. Die Anlaufschräge 15 des Ringes 11 gelangt zur Anlage am Dichtungsring 14. Er wird beim weiteren Aufschieben des Rotorlagers 1 durch die Anlaufschräge 15 elastisch zusammengedrückt. Dadurch verringert sich sein Außendurchmesser 17 auf den Innendurchmesser 18 des Ringes 11, an dessen Innenseite 13 der Dichtungsring 14 dann unter radial wirkender Federkraft anliegt.

Dabei wird gleichzeitig der stufenförmige Spalt 16 so stark verkleinert, daß nur noch ein sehr schmaler Spalt 24 verbleibt (Fig. 3). Dadurch wirkt der Dichtungsring 14 als Labyrinthdichtung für das unter Druck stehende Spülwasser, das durch den Spalt 9 auf den Dichtungsring 14 drückt. Es kann darum durch den stark verkleinerten stufenförmigen Spalt 24 nur sehr wenig Wasser fließen, das gerade ausreicht, um einen Lauffilm zur Schmierung der axialen Lauffläche des Rotorarmes 2 zu bilden. Durch den Dichtring 14 mit seinem kleinen Spalt 16 wird verhindert, daß eine größere Menge Schälwasser durch das Rotorlager 1 gepreßt wird und so dem Spülvorgang verloren geht. Da nur noch wenig Wasser fließen kann, wird auch die Schaumbildung stark herabgesetzt.

Die der Druckseite des Spülwassers zugewandte wirksame Oberseite 19 des Dichtungsringes 14 ist größer als die radial wirkende Dichtfläche 21 an der Unterseite 20 des Dichtungsringes 14. Die Druckseite des Spülwassers ist in Fig. 1 mit den Pfeilen 10 für die Spülwasserströmung im Spalt 9 dargestellt. Die Dichtfläche 21 an der Unterseite 20 des Dichtungsringes 14 entspricht seiner Lauffläche und wird dadurch gebildet, daß die Breite des Dichtungsringes 14 bzw. der verbleibende Innendurchmesser im zusammengedrückten und eingesetzten Zustand des Dichtungsringes so bemessen ist, daß über den gesamten Umfang stets ein Teil der Unterseite 20 des Dichtungsringes auf dem unteren Rand 22 der Ringnut 12 aufliegt. Der Dichtungsring 14 ist so ausgebildet, daß die gegen die Zylinderfläche 13 des Ringes 11 wirkende Federkraft des Dichtungsringes 14 größer ist als die Reibungskraft des Dichtungsringes auf der Dichtfläche 21 der Ringnut 12. Dadurch wird der Dichtungsring 14 beim Drehen des Rotorarmes 2 vom Ring 11 zuverlässig mitgenommen. Die Dicke des Dichtungsringes 14 ist kleiner als die Breite der Ringnut 12, so daß die Oberseite 19 des Dichtungsringes axialen Abstand von der benachbarten Seitenwand der Ringnut hat. Außerdem hat der Dichtungsring Abstand vom Nutboden.

Die Funktionsweise der Dichtungsvorrichtung wird nachfolgend beschrieben. Nachdem der Dichtungsring 14 in die Ringnut 12 der Rotornabe 6 eingesetzt worden ist, wird durch Aufsetzen des Rotorarmes 2 mit dem Motorlager 1 und dem Ring 11 auf den Dichtungsring 14 zunächst eine Abdichtung für das unter Druck stehende Spülwasser gemäß den Pfeilen 9 in axialer Richtung erreicht, da der federnd zusammengedrückte Dichtungsring 14 gegen die Innenseite 13 des Ringes 11 gedrückt wird. Der von der Umwälzpumpe erzeugte Druck für das Spülwasser pflanzt sich nicht nur in die Rotorarme 2 in Richtung der Pfeile 7 fort, sondern auch in den Spalt 9 am Kopfende 8 der Rotornabe 6. Das unter Druck stehende Spülwasser im Ringspalt 9 drückt gleichzeitig auf die Oberseite 19 des Dichtungsringes 14. Da seine gesamte Oberseite 19 frei ist und mit Druck beaufschlagt werden kann, seine Unterseite 20 hingegen nur in dem nicht durch die Nutseitenwand 22 abgestützten bereich frei liegt, wird der Dichtungsring 14 mit dem im System herrschenden Druck mit seiner Unterseite 20 stets fest auf den unteren Rand 22 der Ringnut 12 gedrückt. Der Rand 22 bildet damit eine Dichtfläche für das Spülwasser.

Der Dichtungsring 14 wird durch den jeweils herrschenden Druck infolge der unterschiedlich großen Flächen seiner wirksamen Ober- und Unterseite 19, 20 ausreichend fest gegen den Nutrand 22 gedrückt, so daß eine einwandfreie Abdichtung gewährleistet ist. Da der Dichtungsring 14 mit dem Ringansatz 11 durch entsprechende Federspannung fest verbunden ist, wird das Rotorlager 1 und damit der Rotorarm 2 stets gegen die Dichtfläche 21 gedrückt. Der im eingesetzten Zustand als Labyrinthdichtung wirkende schmale stufenförmige Spalt 24 des Dichtungsringes 14 läßt nur ganz wenig Wasser durch den Spalt, das jedoch ausreicht, um als Schmierung für einen Lauffilm zur Lagerung des sich drehenden Rotors zu dienen.

Im montierten Zustand der Dichtungsvorrichtung bzw. des Rotorlagers 1 wird durch entsprechende Bemessung sicherge stellt, daß zwischen dem Boden der Ringnut 12 in der Rotornabe 6 und der Innenwandung des Dichtungsringes 14 auch bei höheren Toleranzen der Einzelteile immer ausreichend Spiel vorhanden ist, um ein Blockieren des Systemes zu verhindern. Der Nutboden hat einen Durchmesser 23, der kleiner ist als der Innendurchmesser des Dichtungsringes 14. Das Dichtungssystem ist völlig unkritisch gegen große Fertigungstoleranzen, da lediglich dafür gesorgt werden muß, daß immer eine Abdichtung zwischen der Unterseite 20 des Dichtungsringes 14 und dem unteren Rand 22 der Ringnut 12 vorhanden ist. Der Druck des Spülwassers auf die Oberseite 19 des Dichtungsringes 14 bewirkt, daß der Dichtungsring 14 selbst bei unterschiedlichen Axialtoleranzen zwischen Rotorlager 1 und Rotorachse immer gegen den Nutrand 22 gedrückt wird.

Praktische Versuche haben ergeben, daß gegenüber der herkömmlichen Ausführung die Schälwasserverluste an der Lagerstelle um ein Vielfaches verringert werden. Selbstverständlich kann die Dichtungsvorrichtung am oberen und am unteren Rotorarm bzw. Rotorlager vorgesehen werden. Der verengte Spalt 24 des Dichtungsringes 14 in der Einbaulage kann selbstverständlich nicht nur durch eine stufenförmige Ausbildung gemäß Fig. 3 erzeugt werden. Es ist auch jede andere Spaltform möglich, soweit sie nur minimale Wassermengen durchläßt, die zur Schmierung bzw. als Lauffilm für das Rotorlager 1 dienen können.

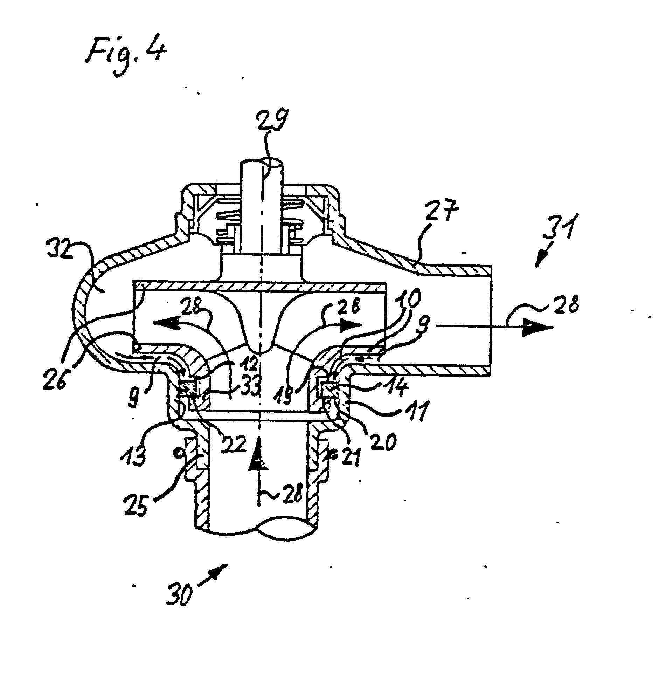

Beim Ausführungsbeispiel gemäß Fig. 4 ist die Dichtungsvorrichtung in der Umwälzpumpe eines Geschirrspülers untergebracht. Aus Übersichtlichkeitsgründen sind der Motor und weitere Details der Umwälzpumpe und des Geschirrspülers nicht dargestellt. Teile mit der gleichen Funktion wie beim ersten Ausführungsbeispiel der Rotorlagerung sind mit gleichem Bezugszeichen versehen worden. Das Spülwasser wird von einer Saugseite 30 über einen Ansaugstutzen 25, ein Laufrad 26 und ein Umwälzpumpengehäuse 27 zur Druckseite 31 gefördert (wobei der Weg des Spülwassers durch die Pfeile 28 markiert wird). In einer Spiralkammer 32 der Umwälzpumpe baut sich der Druck auf, mit der das Spülwasser dann durch das Fördersystem gefördert wird. Hinter dem Ansaugstutzen 25 im Bereich des Laufradlagers ist das Umwälzpumpengehäuse 27 mit dem zylindrischen Ring 11 versehen. Das unter Druck stehende Spülwasser fließt auch durch den Spalt 9 zwischen dem Laufrad 26 und dem Umwälzpumpengehäuse 27 (Pfeile 10). Das Laufrad 26 hat eine Nabe 33, die mit Abstand vom Ring 11 umgeben ist und in der Außenseite die Ringnut 12 aufweist. In sie greift der Dichtungsring 14 in der Einbaulage ein, in welcher er entsprechend dem vorigen Ausführungsbeispiel federnd zusammengedrückt ist und unter Spannung an der Innenseite 13 des Ringes 11 anliegt. Die Anordnung des Dichtungsringes 14 in der Ringnut 12 entspricht im übrigen dem Ausführungsbeispiel gemäß den Fig. 1 bis 3. Die Dichtungsvorrichtung gewährleistet eine Dichtung in axialer und radialer Richtung für das Spülwasser, da der Dichtungsring 14 federelastisch gegen die Innenseite 13 des Ringes 11 und gleichzeitig unter dem Betriebsdruck mit seiner Unterseite 20 gegen den Nutrand 21 gedrückt wird Damit wird in der beschriebenen Weise eine axiale und radiale Abdichtung für das Spülwasser in der Umwälzpumpe erreicht. Auch hier steht die frei liegende Oberseite 19 des Dichtungsringes 14 unter ständigem Druck des Spülwassers im Spalt 10 und bewirkt so eine Abdichtung des Spülwassers in radialer Richtung am Laufradlager durch die Dichtfläche 21. Die der Druckseite des Spülwassers zugewandte wirksame Oberseite 19 des Dichtrungsringes 14 ist auch bei dieser Ausführungsform größer als die axiale Dichtfläche 21 an der Unterseite 29 des Dichtrungsringes 14.

Die Dichtungsvorrichtung für die Umwälzpumpe ist im wesentlichen gleich ausgebildet wie die Dichtungsvorrichtung gemäß den Fig. 1 bis 3. Durch die Dichtungsvorrichtung wird der Teil des unter Druck stehenden Spülwassers, der durch den Spalt 9 für das Spiel zur Laufraddrehung abfließt, wesentlich verringert. Damit wird der Wirkungsgrad der durch eine Kreiselpumpe gebildeten Umwälzpumpe erhöht, wobei bei gleich bleibender Leistung des Pumpenmotors eine größere Menge gefördert wird und sich ein höherer Druck aufbaut. Da der Spalt im Lagerbereich zwischen dem Laufrad 26 und dem Umwälzpumpengehäuse 27 in axialer und in radialer Richtung minimiert ist und durch den als Labyrinthdichtung wirkenden Spalt 24 des Dichtungsringes 14 nur ganz geringe Wassermengen fließen können, wird eine Schaumbildung und damit eine entsprechende Geräuschbildung in der Umwälzpumpe vermieden. Zusammengefaßt läßt sich sagen, daß durch die beschriebenen Dichtungsvorrichtungen bei den Rotorsystemen und der Umwälzpumpe die geförderte Wassermenge mit einem definierten Druck weitestgehend verlustlos auf das Spülgut gebracht werden kann.

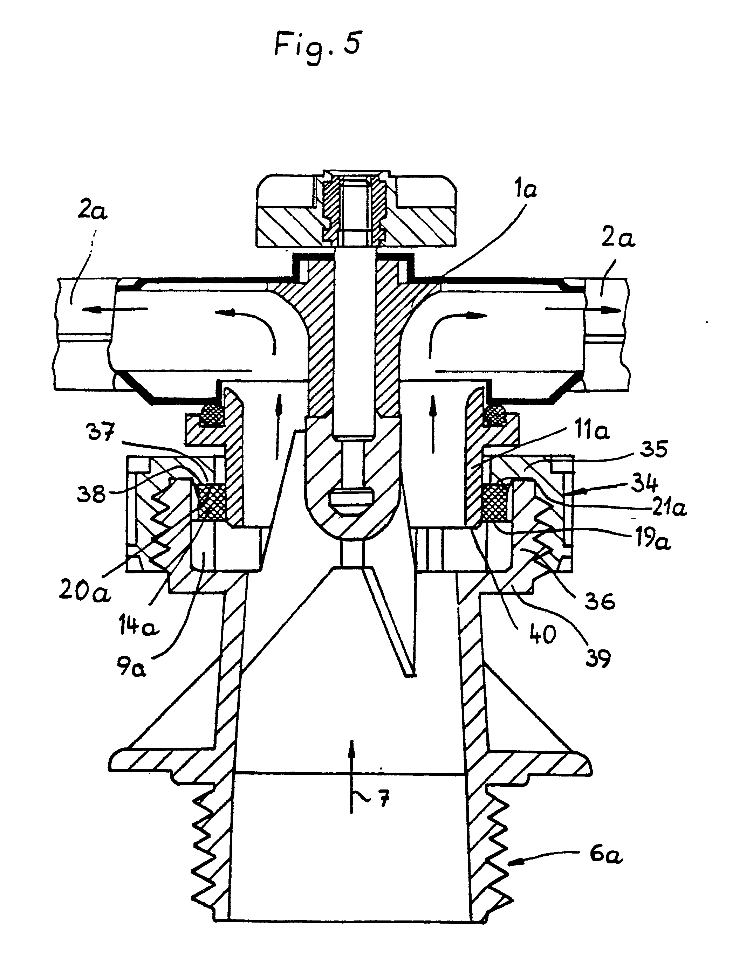

Bei der Ausführungsform gemäß Fig. 5, die eine Dichtungsvorrichtung am unteren Rotor eines Geschirrspülers zeigt, ist auf das obere Ende 36 des Tragrohres 6a eine Mutter 34 geschraubt. Sie hat einen radial nach innen gerichteten Flansch 35, der mit Abstand den in der Einbaulage nach unten gerichteten zylindrischen Ring 11a des Rotorlagers 1a umgibt. Auf dem Ring 11a sitzt der Dichtungsring 14a, der wiederum unter einer radialen Federkraft axial dichtend auf dem Ring 11a sitzt. Im Gegensatz zu den vorigen Ausführungsbeispielen ist für den Dichtungsring 14a keine Ringnut vorgesehen. Der Dichtungsring 14a wird beim Aufschieben auf den Ring 11a im Gegensatz zu den vorigen Ausführungsbeispielen elastisch aufgeweitet, so daß er mit radialer Vorspannung auf dem Ring sitzt.

Der Flansch 35 der Mutter 34 weist am radial inneren Rand eine gegen den Dichtungsring 14a gerichtete ringförmig umlaufende Erhöhung 37 auf, an deren Stirnseite 38 der Dichtungsring 14a unter dem Betriebsdruck radial dichtend anliegt. Das von der (nicht dargestellten) Pumpe geförderte Spülwasser durchströmt in Richtung des Pfeiles 7 das Tragrohr 6a und tritt nach Durchströmen des Rotorlagers 1a in die Rotorarme 2a ein. Außerdem kann das Spülwasser durch den Spalt 9a zwischen einem radial nach außen gerichteten Absatz 39 des Tragrohres 6a und der Stirnseite 40 des Ringes 11a zum Dichtungsring 14a strömen. Die der Druckseite zugewandte Seite 19a des Dichtungsringes liegt wiederum frei, während die gegenüberliegende Seite 20a teilweise durch die Stirnseite 38 der Erhöhung 37 bedeckt ist. Dadurch wird im Berührungsbereich zwischen der Stirnseite 38 und der Seite 20a des Dichtringes 14a die Dichtfläche 21a gebildet, die radial wirksam ist. Da die Oberseite 19a des Dichtringes 14a größer ist als die radial wirksame Dichtfläche 21a, wird der Dichtungsring unter dem Betriebsdruck fest gegen die Fläche 38 der Mutter 34 gedrückt, so daß eine einwandfreie radiale Abdichtung gewährleistet ist. Je nach dem Betriebsdruck wird somit selbsttätig die Anpreßkraft des Dichtungsringes an die Erhöhung 37 eingestellt, so daß in Abhängigkeit vom Betriebsdruck eine einwandfreie Radialabdichtung sichergestellt ist. Wie bei den vorigen Ausführungsbeispielen kann das Druckmedium auch an die Umfangsfläche des Dichtungsringes gelangen, so daß zusätzlich zu der radial wirkenden Federkraft unterstützend auch der Betriebsdruck wirkt und den Dichtungsring zuverlässig gegen den Ring 11a drückt, so daß auch eine einwandfreie axiale Abdichtung gewährleistet ist.

**Patentansprüche**

1. Dichtungsvorrichtung für ein Förder- und Verteilsystem des Spülwassers von Haushaltsgeräten, wie Geschirrspüler, mit einem Tragrohr (6), an dem ein Rotor (2) drehbar gelagert ist, und einem zwischen Tragrohr und Rotor eingesetzten Dichtungsring (14), dadurch gekennzeichnet, daß der Dichtungsring (14, 14a) radial federnd mit einem zumindest teilweise in Umfangsrichtung verlaufenden Spalt (16, 24) ausgebildet ist, daß der Dichtungsring (14, 14a) in der Einbaulage einerseits mit einer achsparallelen Fläche federelastisch verformt an ein dem Rotor (2, 2a) zugehöriges Zylinderteil (11, 11a) und andererseits mit einer radialen Fläche (20, 20a) gegen eine parallel zur Rotorebene liegende, dem Tragrohr (6, 6a) zugehörige Dichtfläche (21, 21a) anliegt.

2. Dichtungsvorrichtung nach Anspruch 1, dadurch gekennzeichnet, daß die Druckseite des Spülwassers auf der der Dichtfläche (21, 21a) am Tragrohr (6, 6a) abgelegenen radialen Fläche (19, 19a) des Dichtungsringes (14, 14a) anliegt.

3. Dichtungsvorrichtung nach Anspruch 2, dadurch gekennzeichnet, daß die der Druckseite des Spülwassers zugewandte Fläche (19, 19a) des Dichtungsringes (14, 14a) frei liegt.

4. Dichtungsvorrichtung nach einem der Ansprüche 1 bis 3, bei der der Dichtungsring in einer Ringnut liegt,

dadurch gekennzeichnet, daß die Breite der Ringnut (12) größer ist als die Dicke des Dichtungsringes (14).

5. Dichtungsvorrichtung nach einem der Ansprüche 1 bis 4,

dadurch gekennzeichnet, daß die gegen das Zylinderteil (11, 11a) wirkende Radialkraft des Dichtungs ringes (14, 14a) größer ist als die Reibungskraft des Dichtungsrings (14, 14a) auf der radialen Dichtfläche (21, 21a).

6. Dichtungsvorrichtung nach einem der Ansprüche 1 bis 5,

dadurch gekennzeichnet, daß der Dichtungsring (14a) zur Bildung der Dichtfläche (21a) an einer Stirnseite (38) einer Mutter (34) anliegt, die auf das obere Ende des Tragarmes (6a) geschraubt ist.

7. Dichtungsvorrichtung nach Anspruch 6,

dadurch gekennzeichnet, daß die Mutter (34) einen radial nach innen gerichteteten Flansch (35) hat, dessen radial innerer Rand Abstand vom Rotor hat und an dem der Dichtungsring (14a) anliegt.

## Claims

1. A sealing means for a rinsing-water supply and distribution system in domestic appliances, such as dish-washers, comprising a supporting tube (6) on which a rotor (2) is mounted for rotation, and a sealing ring (14) mounted between the supporting tube and the rotor, characterized in that the sealing ring (14, 14a) is constructed to he radially resilient and has a gap (16, 24) which extends at least partly in a circumferential direction, in that in the mounted condition the sealing ring (14, 14a) is elastically deformed to engage both against a cylindrical portion (11, 11a) belonging to the rotor (2, 2a) with an axially parallel surface and against a sealing surface (21, 21a) belonging to the supporting tube (6, 6a) and disposed parallel to the rotor plane with a radial surface (20, 20a).

2. A sealing means as claimed in Claim 1, characterized in that the radial surface (19, 19a) of the sealing ring (14, 14a) which is remote from the sealing surface (21, 21a) of the supporting tube (6, 6a) is exposed to the pressure of the rinsing water.

3. A sealing means as claimed in Claim 2, characterized in that the surface (19, 19a) of the sealing ring (14, 14a) which is exposed to the pressure of the rinsing water is free.

4. A sealing means as claimed in any one of the Claims 1 to 3, in which the sealing ring is disposed in an annular groove, characterized in that the width of the annular groove (12) is larger than the thickness of the sealing ring (14).

5. A sealing means as claimed in any one of the Claims 1 to 4, characterized in that the radial force with which the sealing ring (14, 14a) acts against the cylindrical portion (11, 11a) is larger than the frictional force of the sealing ring (14, 14a) on the radial sealing surface (21, 21a).

6. A sealing means as claimed in any one of the Claims 1 to 5, characterized in that, in order to form the sealing surface (21 a), the sealing ring (14a) engages against a radial surface (38) of a nut (34) fitted onto the upper end portion of the supporting tube (6a).

7. A sealing means as claimed in claim 6, characterized in that the nut (34) comprises a radially inward flange (35) whose radial inner edge is spaced from the rotor and against which the sealing ring (14a) engages.

## Revendications

1. Dispositif d'étanchéité destiné à un système d'alimentation et de distribution de l'eau de lavage dans des appareils électroménagers, tels que des lave-vaisselle, et muni d'un tube-support (6) sur lequel est appuyé de façon rotative un rotor (2) et d'un anneau d'étanchéité (14) disposé entre le tube-support et le rotor, caractérisé en ce que l'anneau d'étanchéité (14, 14a) est réalisé de façon a être élastique dans le sens radial en présentant une fente (16, 24) s'étendant au moins partiellement dans le sens de la périphérie, en ce que, dans la position de montage, l'anneau d'étanchéité (14, 14a) est appliqué, d'une part, par une surface parallèle à l'axe, sur une partie de cylindre (11, 11a) faisant partie du rotor (2, 2a) tout en étant déformé élastiquement et, d'autre part, par une surface radiale (20, 20a), contre une surface d'étanchéité (21, 21a) s'étendant parallèlement au plan du rotor et faisant partie du tube-support (6, 6a).

2. Dispositif d'étanchéité selon la revendication 1, caractérisé en ce que le côté de refoulement de l'eau de lavage est appliqué sur la surface radiale (19, 19a) de l'anneau d'étanchéité (14, 14a) située à l'opposé de la surface d'étanchéité (21, 21a) du tube-support (6, 6a).

3. Dispositif d'étanchéité selon la revendication 2, caractérisé en ce que la surface (19, 19a) de l'anneau d'étanchéité (14, 14a) située du côté de refoulement de l'eau de lavage est libre.

4. Dispositif d'étanchéité selon l'une des revendications 1 à 3, dans lequel l'anneau d'étanchéité est situé dans une rainure annulaire, caractérisé en ce que la largeur de la rainure annulaire (12) est supérieure à l'épaisseur de l'anneau d'étanchéité (14).

5. Dispositif d'étanchéité selon l'une des revendications 1 à 4, caractérisé en ce que la force radiale de l'anneau d'étanchéité (14, 14a) agissant sur la partie de cylindre (11, 11a) est supérieure à la force de frottement que l'anneau d'étanchéité (14, 14a) exerce sur la surface d'étanchéité radiale (21, 21a).

6. Dispositif d'étanchéité selon l'une des revendications 1 à 5, caractérisé en ce que, pour former la surface d'étanchéité (21a), l'anneau d'étanchéité (14a) est appliqué sur une face frontale (39) d'un écrou (34) vissé sur l'extrémité supérieure du bras-support (6, 6a).

7. Dispositif d'étanchéité selon la revendication 6, caractérisé en ce que l'écrou (34) présente une collerette (35) dirigée radialement vers l'intérieur, collerette dont le bord intérieur radial est séparé par une distance du rotor et sur laquelle est appliqué l'anneau d'étanchéité (14a).

Fig. 1

Fig. 2

Fig. 3

Fig. 4

# Fig. 5